# EUROPEAN PATENT SPECIFICATION

(11) **EP 0 225 169 B1**
(45) Date of publication and mention of the grant of the patent: **07.01.1993**
(21) Application number: 86309220.1
(22) Date of filing: 26.11.1986
(51) Int. Cl.: B41J 2/135, G06K 1/12

(54) **Ink jet apparatus**
Tintenstrahlgerät
Appareil à jet d'encre

(30) Priority: 26.11.1985 US 801926
(43) Date of publication of application: 10.06.1987
(73) Proprietor: DATAPRODUCTS CORPORATION, Woodland Hills California 91365 (US)
(72) Inventor: Gardner, William Reavis, Wilton Connecticut (US); Rogers, Robert Lincoln, Sandy Hook Connecticut (US); Ruggiero, Richard, Danbury Connecticut (US)
(74) Representative: Stanley, David William

(56) References cited:
- DE-A- 2 628 415
- FR-A- 2 252 740
- FR-A- 2 375 989
- US-A- 4 250 510

## Description

This invention relates to impulse or drop-on-demand ink jet printers. This invention also relates to printers which are capable of printing bar codes.

In an impulse or drop-on-demand ink jet, a single chamber, including a single ejection orifice, is provided. A droplet of ink is ejected from the single orifice in response to a contraction of volume in the chamber typically caused by the state of energization of a transducer which may be made, for example, from a piezo-electric material.

U.S. Patent No. 4250510 and French Patent No. FR-A-2 252 740 describe bar code printers which generally have an ink chamber including an inlet and a plurality of ejection orifices, an ink supply assembly coupled to the inlet of the ink chamber, and a transducer assembly coupled to the chamber.

Ink jet printers employing impulse or drop-on-demand ink jets typically have the same resolution in both the X and Y direction. This resolution permits a wide range of printing, including bar codes as well as alpha-numeric characters. However, a full channel is required for each droplet ejected.

It is an object of this invention to provide a simplified and lower cost ink jet apparatus by minimizing the required number of channels.

According to the invention, there is provided a drop-on-demand ink jet apparatus comprising: an elongated chamber including an inlet, a first wall having a plurality of ejection orifices forming an elongated array substantially coextensive with said chamber, and a movable, second wall opposite said first wall and coextensive with said chamber;
ink supply means coupled to said inlet; and
transducer means including an elongated member having an axis of elongation along the length thereof which is perpendicular to said elongated array, said elongated member being adapted to expand and contract along said axis of elongation in response to its state of energisation to move said second wall of said chamber substantially as a plane toward said plurality of ejection orifices, for simultaneously ejecting droplets with substantially uniform velocity from each orifice of said plurality of ejection orifices. The orifices may be arranged in any predetermined pattern.

The apparatus may be utilized for bar code printing where a greater resolution is required in one direction (i.e., the width of the bar) as compared with the resolution required in the other direction (i.e., the height or length of the bar).

At least one additional chamber, including a plurality of orifices, may be utilized. The ink supply means is also coupled to the chamber with means for simultaneously ejecting a plurality of droplets from the orifices of the at least one additional chamber.

In one embodiment of the invention, the additional chamber is positioned with respect to the first-mentioned chamber such that a linear array of orifices in one chamber is parallel or co-linear with a linear array of orifices in another chamber. In this configuration, a bar having an overall length equal to the composite length of the array of orifices in the chambers is achieved. In the alternative, the orifices may be aligned in a parallel manner but the chambers may be displaced in the scanning direction. The droplets are ejected from the different chambers in a time delayed fashion while the orifices scan relative to the target so as to create a bar on the target having an overall length equal to the composite length of the orifices in the various chambers.

In accordance with another aspect of the invention, droplets from only certain chambers are ejected so as to permit bars of different lengths to be generated. For example, the orifices of one chamber, corresponding to a short bar length, eject droplets while droplets are not ejected from orifices of another chamber. On the other hand, all orifices of all chambers may eject droplets to provide a bar on the target of greater height or length.

In accordance with another aspect of the invention, the droplets from the orifices of a given chamber are preferably ejected along parallel paths which are aligned so as to form a bar on the target.

The invention extends to a method of simultaneously generating a pattern of droplets on demand utilising a drop-on-demand ink jet apparatus comprising a chamber having a first wall and a second wall, a plurality of orifices in said first wall forming an array substantially coextensive with said chamber, and means including an elongated member having an axis of elongation along the length thereof which is perpendicular to said array for changing the volume of ink in said chamber, said elongated member being adapted to expand and contract along said axis of elongation in response to its state of energisation, said method comprising the following steps: changing the volume of ink in said chamber by energising said elongated member thereby moving said second wall substantially as a plane towards said first wall, wherein said plane is substantially parallel to said array; and simultaneously ejecting a droplet from each of said plurality or orifices at a substantially uniform velocity.

The invention will be better understood by referring by way of example, to the following drawings, wherein:-
FIG. 1 is a perspective view of a system depicting the invention incorporated in the bar code printer;
FIG. 2 is a sectional view of the bar code printer head of FIG. 1 taken along line 2-2 of FIG. 1;
FIG. 3 is a sectional view of the chambers within the bar code printing head taken along line 3-3 of FIG. 2;
FIGs. 3(a) and (b) depict bar codes which may be printed utilizing the apparatus of FIGs. 1 -5;
FIG. 4 is a sectional view of the chambers of an alternative bar code printer constructed in accordance with this invention;
FIG. 5 is a sectional view of chambers in a bar code printer representing yet another embodiment of the invention;
FIG. 6 illustrates a bar code which may be generated by the apparatus of FIGs. 1 - 5;
FIG. 7 depicts chambers in accordance with this invention which may be utilized in printing alpha-numeric characters;
FIG. 8 is a perspective view of another embodiment of the invention employing an enlarged linear array of orifices;
FIG. 9 is an exploded perspective view ofthe print head shown in FIG. 8;
FIG. 10 illustrates a bar code generated by the apparatus of FIGs. 8 and 9;
FIG. 11 is an exploded view of an alternative embodiment of the invention;
FIG. 12 illustrates bar codes which can be generated by the apparatus of FIG. 11; and
FIG. 13 is an exploded perspective view of a print head representing another embodiment of the invention.

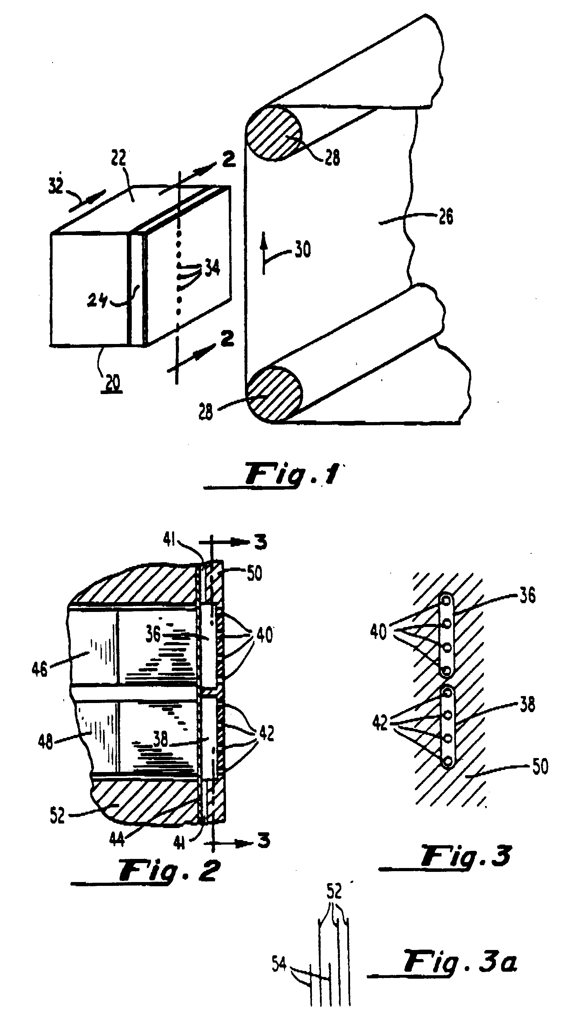

Referring to FIG. 1, an impulse or drop-on-demand ink jet print head 20 includes a reservoir 22 and an imaging head 24 which is juxtaposed to a target in the form of paper 26. The paper 26 is advanced by means of mechanism 28 so as to move the paper in increments in the direction indicated by arrow 30. In each position or increment of the paper, the print head 20 scans in the direction indicated by the arrow 32.

In accordance with this invention, a plurality of orifices 34 are linearly arranged as depicted in FIG. 1. The plurality of the orifices 34 is associated with a single impulse ink jet chamber which will now be described in detail with reference to FIGs. 2 and 3.

As shown in FIG. 2, there are two chambers 36 and 38 and each of those chambers includes a total of four orifices 40 and 42. Each chamber 36 and 38 is served by a restricted inlet 41 which supplies ink from the reservoir 22 shown in FIG. 1.

The rear of the chambers 36 and 38 is formed by a wall comprising a diaphragm 44 which is coupled to transducers 46 and 48 associated with chambers 36 and 38 respectively. As shown in FIG. 2, the chambers 36 and 38 are formed in a chamber plate 50 while the transducers 46 and 48 are mounted in a body 52.

As shown in FIG. 3, the linear array of orifices 40 and the linear array of orifices 42 are parallel and co-linear. As a result, simultaneous ejection of droplets will produce a bar on a target such as the paper 26 shown in FIG. 1 which has an overall length equal to the composite length of the array of orifices 40 and 42.

A change in state of the energization of the transducer 46, for example, will result in the ejection of droplets from the orifices 40 at substantially equal velocity. By simultaneously changing the state of energization of the transducer 48, droplets can also be ejected at substantially equal velocity from each of the four orifices 42 and, under those circumstances, the result is a bar equal to the composite length of the array of orifices 40 and the array of orifices 42. On the other hand, if only one of the transducers 46 or 48 is energized, a bar will be generated equal to only the length of one of the arrays of orifices 40 or 42.

Referring now to FIG. 3(a), it will be seen that bars of different lengths may be generated depending upon the number of transducers energized. As shown in FIG. 3(a), bars 52 have substantially double the length of bars 54. In this type of bar code, bars 52 may correspond to, for example, the digit one and the short bars 54 may correspond to the digit zero. Such a code is utilized by the U.S. Postal Service and is referred to as the POSTNET code.

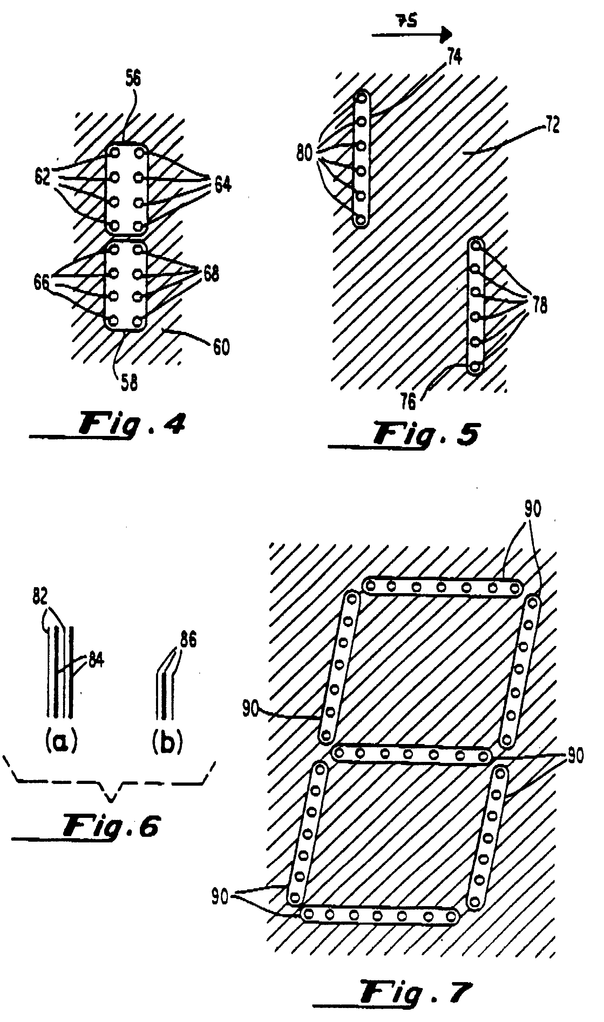

Referring now to FIG. 4, another ink jet apparatus is disclosed comprising chambers 56 and 58 and a chamber plate 60. The apparatus is substantially identical to that shown in FIGs. 2 and 3, except that two linear arrays of orifices 62 and 64 are contained within the chamber 56 and two linear arrays of orifices 66 and 68 are contained within the chamber 58. The bar code generated by the apparatus shown in FIG. 4 is substantially identical to that shown in FIG. 3(a) except that the width of the bar is slightly greater. However, the horizontal resolution still remains greater than the vertical resolution.

Referring to FIG. 5, a chamber plate 72 of an imaging head is shown wherein chambers 74 and 76 are parallel but displaced along the scanning direction as depicted by the arrow 75. Once again, however, each chamber 76 and 74 includes a plurality of orifices 78 and 80 respectively.

The imaging head shown in FIG. 5 will lay deposit droplets on a target in a bar configuration using apparatus of the type shown in FIG. 1. This is accomplished by energizing a transducer not shown which is associated with the chamber 74 so as to simultaneously eject a plurality of droplets from the orifices 80 and subsequently, after a time delay, energizing transducers associated with the chamber 76 so as to simultaneously eject another plurality of droplets from the orifices 78 and deposit the remainder of the bar previously deposited by droplets from the orifices 80.

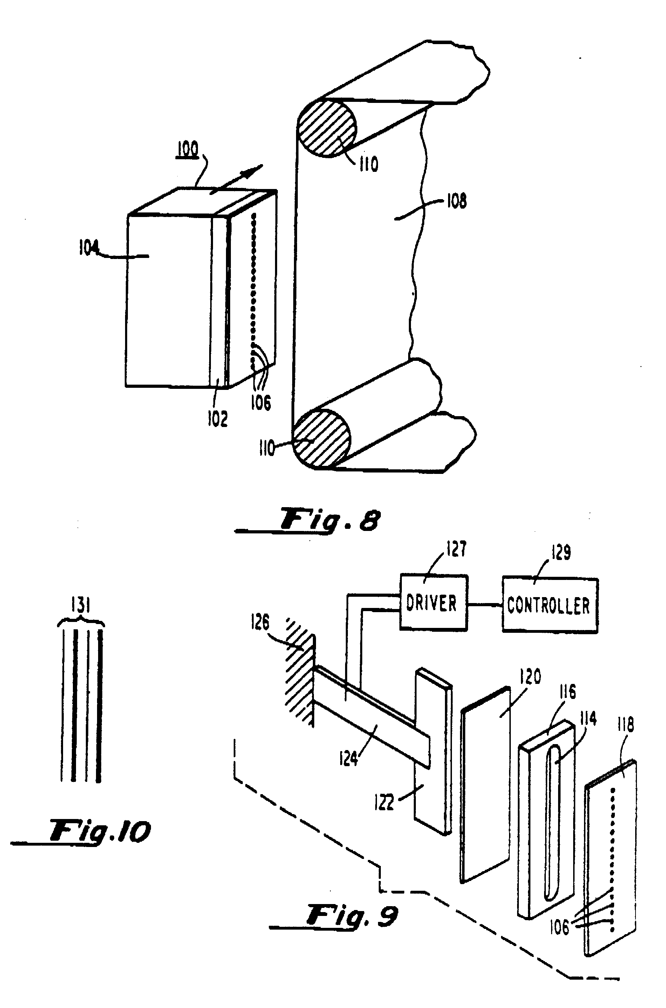

It will, therefore, be appreciated that the same bar coding results may be achieved by the chamber and orifice configurations of FIGs. 2 - 5 in order to achieve the bar code as depicted in FIG. 3(a). However, it will also be appreciated that a high degree of resolution in the direction of scanning, i.e., one orifice wide resolution, permits bar coding of the type wherein the width of the bar is the information-carrying factor. Bar coding of this type is shown in FIGs. 6(a) and 6(b).

As shown in FIG. 6(a), the bar code has a height or length equal to the composite height or length of the orifices in the devices shown in FIGs. 1 - 5. However, the bars 82 are narrow as contrasted with the bars 84, and the information content is coded into the widths of the bars, the widths of the spaces therebetween and the combinations of those widths.

In FIG. 6(b), the bar code is of a length or height equal to the length or height of the orifices in only one of the chambers so as to produce shorter bars 86 of various widths with information content therein. In order to produce the bars shown in FIGs. 6(a) and 6(b), the transducers associated with the chambers are energized at the appropriate times so as to deposit a single row of droplets on the target or paper forming a narrow bar or to deposit multiple rows of droplets in rapid succession to create wider bars. All of this occurs while the print head scans the target in a direction generally transverse to the bars.

In bar coding of the type shown in FIGs. 6(a) and 6(b), it is of course particularly important to have a high degree of resolution in the direction of scanning, i.e., transverse to the bars, as compared with the degree of resolution in a direction parallel with the bars. Since a high degree of resolution is required in only a single direction, this invention is ideally suited for bar coding with its attendant advantages of eliminating complexity in the imaging head, including the reduction of the number of chambers and transducers as well as reducing the complexity of the drive circuitry, memory and buffers associated with the transducers.

In accordance with this invention, the orifices associated with any one chamber are arranged in a predetermined pattern. With the orifices of a chamber or a plurality of chambers aligned in parallel manner, the invention lends itself to bar coding. However, another pattern of chambers and orifices within a chamber may be selected. As shown in FIG. 7, a chamber plate 88 comprises a plurality of chambers 90. Each of the chambers 90 includes a linear array of ejection orifices 92.

As shown in FIG. 7, the chambers 90 are arranged so as to permit the printing of alpha-numeric characters by selectively energizing the transducers associated with particular chambers 90. As a result, alpha-numeric characters may be printed with substantial clarity with a seven channel device. It will, of course, be appreciated that more chambers may be utilized to achieve a higher degree of resolution but in all cases the complexity of the overall apparatus is reduced even though the total number of ejection orifices is not compromised.

Referring now to FIG. 8, a printing head 100 is shown having an imaging head 102 and a reservoir 104. The imaging head 102, which includes a plurality of orifices 106, is juxtaposed to a target in the form of paper 108, mounted on a transport mechanism 110.

As shown in FIG. 8, the orifices 106 are capable of depositing an entire bar on the paper 108 as the imaging head 102 is scanned in the direction shown by the arrow 112. The width of the bar deposit may be controlled by the sequentially ejecting droplets from the orifices 106 so as to deposit substantially contiguous linear arrays of dots, thereby providing a modulated or controlled width of the bar as the imaging head 102 scans the paper 108.

As in the previous embodiments of the invention, a plurality of the orifices 106 is associated with, in this case, a single chamber 114. The chamber 114 is located in a chamber plate 116 which is adapted to be covered by an orifice plate 118 containing the orifices 106. A diaphragm 120 is secured to the rear of the chamber plate 116 and is juxtaposed to an enlarged foot 122 attached to a transducer 124. As shown in FIG. 9, the transducer 124 is affixed to a firm, relatively immovable surface 126, and energized by a driver 127 in response to a controller 129.

It will be appreciated that energization of the transducer 124 will simultaneously eject droplets through the orifices 106 so as to create elongated bars as shown in FIG. 10. As earlier mentioned, the width of these bars may be modulated or controlled by the controller 129 so as to provide information content in the traditional bar coding sense as depicted by bars 131 shown in FIG. 10.

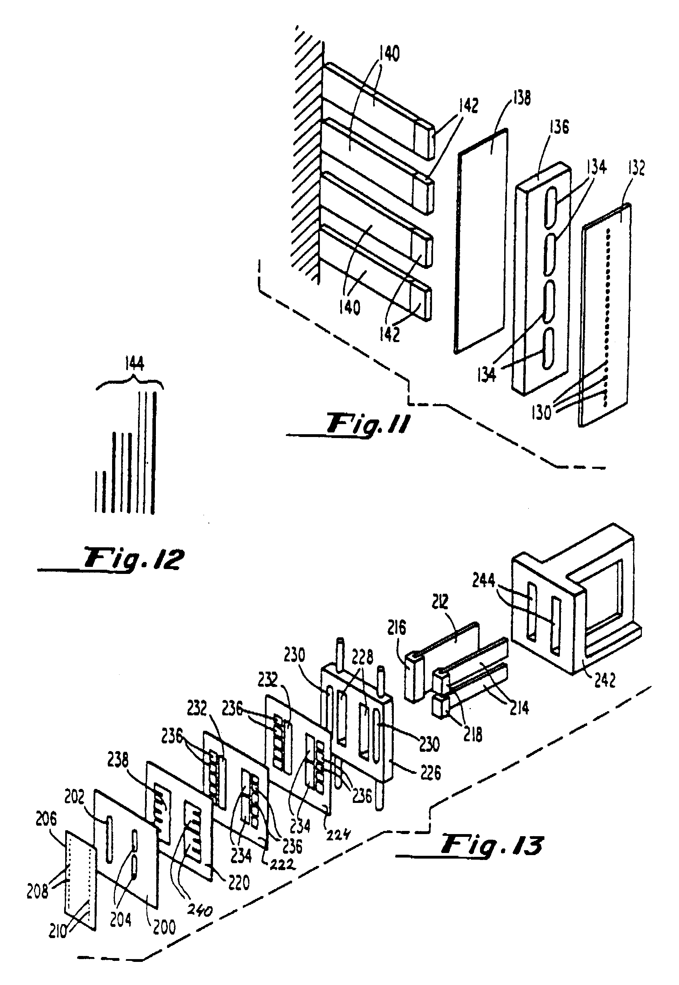

FIG. 11 illustrates another embodiment of the invention wherein a plurality of orifices 130 in an orifice plate 132 are juxtaposed to four separate aligned chambers 134 and a chamber plate 136. The rear of the chamber plate 136 is covered by a diaphragm 138 juxtaposed to four separately energizable transducers 140, having respective feet 142.

By selecting the number of transducers 140 which are energized in response to a driver and controller not shown, the overall height of the bars deposited in a suitable target may be controlled. In FIG. 12, bars 144 of four different heights are illustrated, all of which are capable of being generated by the apparatus of FIG. 11.

An apparatus incorporating the various chamber and orifice configurations previously discussed is shown in FIG. 13. Referring now to FIG. 13, the chamber plate 200 comprising a first elongated chamber 202 located along side two vertically aligned chambers 204 which are half the length of the chamber 202 is juxtaposed behind an orifice plate 206. The plate 206 includes a first vertically disposed, linear array of orifices 208 in front of the chamber 202 and a second vertically disposed, linear array of orifices 210 located in front of the chambers 204.

The ejection of droplets from orifices 208, 210 or half the orifices 210 is controlled by the selective energization of the elongated transducer 212 and 214. More specifically, the elongated transducer 212 is juxtaposed to the orifices 208. Transducers 214 are juxtaposed to chambers 204. An elongated foot 216 is coupled to the transducer 212 and feet 218 are coupled to the transducers 214.

By energizing the transducers 212 and 214 in the manner so as to create expansion and contraction along the axis of elongation, the feet 216 and 218 are advanced toward and retracted away from chambers 202 and 204 so as to selectively eject droplets from the orifices 208 and 210. The manner in which the feet 216 and 218 are coupled to the chambers 202 and 204 will now be discussed.

Immediately behind the chamber plate 200 are four layers comprising a restrictor plate 220, a first foot plate 222, a second foot plate 224 and a manifold plate 226. The manifold plate 226 includes parallel slots 228 which are adapted to receive the feet 216 and 218. Along side the slots 228 are elongated manifolds 230 which supply ink to the chambers 202 and 204 as well as the associated orifices. The foot plates 222 and 224 comprise elongated openings 232 and 234 through which the feet 216 and 218 extend. Additional vertically aligned openings 236 are provided as a means of supplying ink from the manifold 230 to the chambers 202 and 204. This supply of ink passes through openings 238 and 240 in the restrictor plate 220.

In the preferred embodiment of FIG. 13, it will be appreciated that the feet 216 and 218 may be secured to the foot member 224 by means of a resilient rubber-like material, such as silicon which is marketed under the name RTV. The ends of the transducers 212 and 214 may be cemented to the feet 216 and 218 by means of a suitable adhesive such as, for example, an epoxy. This "potted foot" configuration is presently preferred over the diaphragm designs illustrated in the aforementioned figures for reasons of reliability and durability.

The entire assembly of plates and transducers shown in FIG. 13 is mounted on a body 242 which includes elongated openings 244 which receive the transducers 212 and 214. Transducers 212 and 214 are secured to the body 242 in a manner such that expansion and contraction will advance and retract the feet 216 and 218 toward the orifice plate 206.

It will be appreciated therefore that the apparatus shown in FIG. 13 is capable of generating long bars or short bars of two short bars which, when combined, form along bar for bar coding purposes. Bar coding of the type shown in FIG. 3(a) may therefore be achieved utilizing the apparatus of FIG. 13. At the same time, it is possible to sequentially energize transducers 212 and 214 in a manner and at the appropriate time so as to width-modulate the bars and achieve bar coding of the type shown in FIG. 6.

It will be appreciated that variously sized orifices may be utilized in the invention as described above with various spacings and arrays of various lengths. One particularly suitable orifice size is 0.0254 to 0.0508 mm (0.001 to 0.002 inches) with a spacing between orifices of 0.0762 to 0.1778 mm (0.003 to 0.007 inches). However, the orifices should be spaced a sufficient distance from the walls of the chamber extending parallel to the axis of the orifices so as to assure ejection of droplets from all orifices at substantially uniform velocity. In general, it is preferred that the spacing to the closest wall be at least half of the spacing between the closest orifices.

In some instances, bar lengths of 3.175 to 25.4 mm (0.125 to one inch) are desirable. Where bar length or height modulation is employed as shown in FIG. 3(a) it is generally desirable to have bar width of at least 0.508 mm (0.020 inches). This may require the side-by-side orifice configuration as shown in FIG. 4. Preferably, the overall height or length of the bar is achieved by orifices of a density of 120/25.4 mm (120/inch) to 240/25.4 mm (240/inch).

In order to generate the bars as described herein, suitable drive circuitry for the transducers will be utilized. In this connection, it is possible to eject droplets in response to a single pulse supplied on demand to the transducers. However, it may be desirable to utilize the multi-pulsing technique, such as that disclosed in co-pending application EP 83307850.4, filed December 22, 1983. Where such a multi-pulsing technique is utilized, a greater coverage may be achieved since a greater volume of the ink is ejected.

The transducers which have been shown and described herein are elongated and expand and contract along the axis of elongation in response to energization of the application of voltages transverse to the axis of elongation. Details concerning such an ink jet apparatus are set forth in co-pending application EP 85300713.6, filed February 1, 1985. It will, of course, be appreciated that other transducer configurations may be utilized to generate predetermined patterns through a plurality of orifices in accordance with this invention.

Various inks may be employed in the method and apparatus of this invention. In addition, it is possible to utilize a so-called phase change or hot-melt ink such as that disclosed in co-pending application EP 85305597.8, filed August 6, 1985.

Although particular embodiments of the invention have been shown and described and various modifications suggested, it will be appreciated that other embodiments and modifications which fall within the scope of the invention as set forth in the appended claims will occur to those of ordinary skill in the art. By way of further example, those of ordinary skill will appreciate that the relative movement between the head and paper may also be accomplished by moving only the paper or only the head.

Those of ordinary skill will further appreciate that multiple orifice chambers, such as a multiple orifice chamber having three (3) orifices located at the points of an equilateral triangle, may be utilized to increase dot size.

## Claims

1. A drop-on-demand ink jet apparatus comprising:
an elongated chamber including an inlet, a first wall having a plurality of ejection orifices forming an elongated array substantially coextensive with said chamber, and a movable, second wall opposite said first wall and coextensive with said chamber;
ink supply means coupled to said inlet; and
transducer means including an elongated member having an axis of elongation along the length thereof which is perpendicular to said elongated array, said elongated member being adapted to expand and contract along said axis of elongation in response to its state of energisation to move said second wall of said chamber substantially as a plane toward said plurality of ejection orifices, for simultaneously ejecting droplets with substantially uniform velocity from each orifice of said plurality of ejection orifices.

2. An ink jet apparatus as claimed in Claim 1, wherein said plurality of orifices are in open communication throughout said chamber without intermediate restrictions.

3. An ink jet apparatus as claimed in Claim 1 or 2, wherein said transducer means is juxtaposed to said orifice.

4. An ink jet apparatus as claimed in any preceding Claim wherein a plurality of such chambers are provided with associated ink supply means and transducer means, and said orifices within one of said chambers are substantially linearly arranged so as to be parallel to but offset from said orifices within another of said chambers which are substantially linearly arranged.

5. An ink jet apparatus as claimed in any preceding claim, wherein a plurality of such chambers are provided with associated ink supply means and transducer means, and said orifices within each of said chambers are disposed so as to correspond with segments of an alpha-numeric character.

6. An ink jet apparatus as claimed in claim 1, 2 or 3 for bar code printing, wherein the ejection orifices are linearly aligned; the transducer means are arranged for simultaneously ejecting a plurality of droplets from said aligned orifices; means are provided for creating a relative scanning motion between said chamber and a target for receiving said droplets; and means are provided for controlling said transducer means so as to sequentially eject a plurality of droplets and to deposit said pluralities of droplets in bars of varying widths.

7. An ink jet apparatus as claimed in claim 6 wherein a plurality of such chambers are provided with associated transducer means and controlling means, said means for creating scanning motion are also arranged for creating scanning motion between said plurality of chambers and said target, and said orifices of each of saidchambers are parallel or co-linear so as to permit the deposit of bars having a length equal to the composite length of said orifice in said chambers.

8. An ink jet apparatus as claimed in claim 6 or 7,wherein two such chambers are provided with the overall length of the orifices of the other such chamber being substantially double the overall length of the first such chamber so as to permit the deposit of full bars by the orifices of said other chamber and half bars by the orifices of said first chamber.

9. An ink jet apparatus as claimed in any of the preceding claims, wherein said transducer means comprises an integral piezo-electric member.

10. An ink jet apparatus as claimed in any preceding claim, further comprising a foot member coupling said transducer means to said chamber.

11. An ink jet apparatus as claimed in claim 1, wherein said orifices are equally spaced from the edge of said first wall.

12. An ink jet apparatus as claimed in Claim 1, wherein each of said orifices are spaced a distance from the edge of said first wall equal to at least half a distance between said orifices.

13. An ink jet apparatus as claimed in claim 1, wherein said orifices are substantially uniformly distributed on said first wall.

14. A method of simultaneously generating a pattern of droplets on demand utilising a drop-on-demand ink jet apparatus comprising a chamber having a first wall and a second wall, a plurality of orifices in said first wall forming an array substantially coextensive with said chamber, and means including an elongated member having an axis of elongation along the length thereof which is perpendicular to said array for changing the volume of ink in said chamber, said elongated member being adapted to expand and contract along said axis of elongation in response to its state of energisation, said method comprising the following steps:
changing the volume of ink in said chamber by energising said elongated member thereby moving said second wall substantially as a plane towards said first wall, wherein said plane is substantially parallel to said array; and simultaneously ejecting a droplet from each of said plurality or orifices at a substantially uniform velocity.

15. A method as claimed in claim 14, wherein the droplets are ejected in a linear pattern so as to form a bar.

16. A method as claimed in claim 14, including the repetition of said steps.

## Patentansprüche

1. Tintenstrahlvorrichtung für den Tropfenausstoß auf Abruf, bestehend aus:
einer länglichen Kammer mit einem Eintritt, einer ersten Wand mit einer Vielzahl von Ausstoßöffnungen, die ein längliches Anordnungsschema mit im wesentlichen der gleichen Ausdehnung wie die Kammer bilden und mit einer beweglichen zweiten Wand gegenüber der ersten Wand und mit der gleichen Ausdehung wie die Kammer;
Mitteln für die Tintenzuführung, verbunden mit dem Eintritt und
Wandlern, mit einem länglichen Bauteil, dessen Längsachse senkrecht zum länglichen Anordnungsschema angeordnet ist, wobei das längliche Bauteil so ausgeführt ist, daß es sich entlang der Längsachse in Reaktion auf seinen Energiezustand ausdehnen und zusammenziehen kann, um die zweite Wand dar Kammer im wesentlichen als eine Ebene in Richtung der Vielzahl der Ausstoßöffnungen zu bewegen, damit die Ausstoßtropfen mit im wesentlichen gleichförmiger Geschwindigkeit aus jeder Öffnung der Vielzahl von Ausstoßöffnungen gleichzeitig ausgestoßen werden.

2. Tintenstrahlvorrichtung nach Anspruch 1, bei welcher die Vielzahl der Öffnungen sich über die Kammer ohne Zwischenbegrenzungen in offener Verbindung befindet.

3. Tintenstrahlvorrichtung nach Anspruch 1 oder 2, bei welcher die Wandler an die Öffnung angrenzen.

4. Tintenstrahlvorrichtung nach einem der vorhergehenden Ansprüche, bei welcher eine Vielzahl von solchen Kammern in Verbindung mit Tintenzuführungsmitteln und Wandlern vorgesehen sind und die Öffnungen in einer der Kammern im wesentlichen linear angeordnet sind, parallel oder versetzt gegenüber den Öffnungen in einer anderen der Kammern, die im wesentlichen linear angeordnet sind.

5. Tintenstrahlvorrichtung nach einem der vorhergehenden Ansprüche, bei welcher eine Vielzahl von solchen Kammern in Verbindung mit Tintenzuführungsmitteln und Wandlern angeordnet Sind und die Öffnungen in jeder der Kammern so angeordnet sind, daß sie Segmenten eines alpha-numerischen Zeichens entsprechen.

6. Tintenstrahlvorrichtung nach Anspruch 1, 2 oder 3 für das Drucken von Balkencodes, bei welcher die Ausstoßöffnungen linear ausgerichtet sind, die Wandler für das gleichzeitige Ausstoßen einer Vielzahl Von Tropfen aus den ausgerichteten Öffnungen ausgeführt sind, Mittel für das Erzeugen einer Relativ-Abtastbewegung zwischen der Kammer und einem Ziel für die Aufnahme der Tropfen vorgesehen sind und Mittel für die Steuerung der Wandler vorgesehen sind, um sequentiell eine Vielzahl von Tropfen auszustoßen und die Vielzahl der Tropfen in Balken variierender Breite aufzutragen.

7. Tintenstrahlvorrichtung nach Anspruch 6, bei welcher eine Vielzahl von solchen Kammern mit zugehörigen Wandlern und Mitteln für die Steuerung vorgesehen sind, die Mittel für die Erzeugung der Abtastbewegung ebenfalls für die Erzeugung einer Abtastbewegung zwischen der Vielzahl von Kammern und dem Ziel eingerichtet sind und die Öffnungen jeder der Kammern parallel oder kolinear angeordnet sind, um das Auftragen von Balken mit einer Länge gleich der Zusammengesetzten Länge der Öffnungen in den Kammern zu ermöglichen.

8. Tintenstrahlvorrichtung nach Anspruch 6 oder 7, bei welcher zwei solcher Kammern angeordnet sind, wobei die Gesamtlänge der Öffnungen der anderen Kammer im wesentlichen das Doppelte der Gesamtlänge der ersten Kammer ist, um das Auftragen Von vollständigen Balken mittels der Öffnungen der anderen Kammer und von halben Balken mittels der Öffnungen der ersten Kammer zu ermöglichen.

9. Tintenstrahlvorrichtung nach einem der vorhergehenden Ansprüche, bei welcher die Wandler ein integriertes piezoelektrisches Bauteil sind.

10. Tintenstrahlvorrichtung nach einem der vorhergehenden Ansprüche, die ebenfalls ein Fußbauteil aufweisen, das die Wandler mit der Kammer in Verbindung bringt.

11. Tintenstrahlvorrichtung nach Anspruch 1, in der die Öffnungen von der Kante der ersten Wandung gleichweit beabstandet sind.

12. Tintenstrahlvorrichtung nach Anspruch 1, bei welcher jede der Öffnungen in einer Entfernung von der Kante der ersten Wand von mindestens der halben Entfernung zwischen den Öffnungen angeordnet ist.

13. Tintenstrahlvorrichtung nach Anspruch 1, bei welcher die Öffnungen im wesentlichen auf der ersten Wand gleichmäßig verteilt sind.

14. Verfahren zur gleichzeitigen Erzeugung eines Musters von Tropfen auf Abruf unter Verwendung einer Tintenstrahlvorrichtung mit Tropfenausstoß auf Abruf, bestehend aus einer Kammer mit einer ersten Wand und einer zweiten Wand, einer Vielzahl von Öffnungen in der ersten Wand, die ein Anordnungsschema min im wesentlichen gleichen Ausmaßen wie die Kammer bilden und Mitteln, die ein längliches Bauteil aufweisen mit einer Längsachse, die quer zum Anordnungsschema angeordnet ist zum Verändern des Tintenvolumens in der Kammer, wobei das längliche Bauteil sich entlang der Längsachse in Reaktion auf seinen Einschaltzustand ausdehnen und zusammenziehen kann und wobei das Verfahren die folgenden Schritte umfaßt:
Veränderung des Tintenvolumens in der Kammer durch Einschalten des länglichen Bauteils und die dadurch hervorgerufene Bewegung der zweiten Wand im wesentlichen als eine Ebene in Richtung zur ersten Wand, wo die Ebene im wesentlichen parallel zum Anordnungsschema ist, und
gleichzeitiges Ausstoßen eines Tropfens aus jeder der Vielzahl von Öffnungen mit einer im wesentlichen gleichförmigen Geschwindigkeit.

15. Verfahren nach Anpruch 14, bei welchem die Tropfen in einem linearen Muster ausgestoßen werden, um einen Balken zu bilden.

16. Verfahren nach Anspruch 14, das die Wiederholung der angeführten Schritte einschließt.

## Revendications

1. Un appareil à jets d'encre à projection à la demande comprenant:
une chambre oblongue comportant une entrée, une première paroi pourvue d'une pluralité d'orifices de projection formant une rangée oblongue, s'étendant sensiblement sur la même longueur que ladite chambre, et une seconde paroi mobile, opposée à ladite première paroi et s'étendant sensiblement sur la même longueur que ladite chambre;
des moyens de distribution d'encre accouplés à ladite entrée; et
des moyens formant transducteur, comprenant un élément oblong dont l'axe d'extension dans le sens de la longueur de des derniers est perpendiculaire à ladite rangée oblongue, ledit élément oblong étant adapté pour se dilater et se contracter le long dudit axe d'allongement en réponse à son état d'excitation ou de sollicitation, pour déplacer ladite seconde paroi de ladite chambre, sensiblement comme un plan, vers ladite pluralité d'orifices d'éjection, pour projeter simultanément des gouttelettes à une vitesse sensiblement uniforme à partir de chaque orifice de ladite pluralité d'orifices de projection.

2. Un appareil à jets d'encre selon la revendication 1, dans lequel ladite pluralité d'orifices est en communication ouverte à travers ladite chambre, sans étranglements intermédiaires.

3. Un appareil à jets d'encre selon la revendication 1 ou 2, dans lequel lesdits moyens formant transducteur sont juxtaposés audit orifices.

4. Un appareil à jets d'encre selon l'une quelconque des prédécentes revendications, dans lequel une pluralité de chambres de ce genre sont pourvues chacune moyens de distribution d'encre et de moyens formant transducteur associés, et lesdits orifices dans l'une desdites chambres sont disposés de façon sensiblement linéaire, de manière à être parallèles mais décalés par rapport auxdits orifices ménagés dans une autre desdites chambres et disposès de façon sensiblement linéaire.

5. Un appareil à jets d'encre selon l'une quelconque des précédentes revendications, dans lequel une pluralité de ces chambres sont pourvues chacune de moyens de distribution d'encre et de moyens formant transducteur associés, et lesdits orifices de chacune desdites chambres sont disposés de manière à correspondre avec les segments d'un caractère alphanumérique.

6. Un appareil à jets d'encre selon l'une des revendications 1, 2 ou 3, pour l'impression d'un code à barres, dans lequel les orifices d'éjection sont alignés linéairement; les moyens formant transducteur sont agencés pour projeter simultanément une pluralité de gouttelettes par lesdits orifices alignés; des moyens sont prévus pour créer un déplacement relatif de balayage entre ladite chambre et une cible prévue pour recevoir lesdites gouttelettes; et des moyens sont prévus pour commander lesdits moyens formant transducteur de manière à projeter en séquence une pluralité de gouttelettes et déposer ladite pluralité de gouttelettes en forme de barres de largeurs variables.

7. Un appareil à jets d'encre selon la revendication 6, dans lequel une pluralité desdites chambres sont pourvues chacune de moyens formant transducteur et de moyens de commande associés, lesdits moyens pour créer le déplacement de balayage sont également agencés pour créer un mouvement de balayage entre ladite pluralité de chambres et ladite cible, et lesdits orifices de chacune desdites chambres sont parallèles ou colinéaires, de manière à permettre de déposer des barres d'une longueur égale à la longueur combinée desdits orifices dans lesdites chambres.

8. Un appareil à jets d'encre selon la revendication 6 ou 7, dans lequel les orifices de deux de ces chambres sont prévus de façon que ceux de la seconde desdites chambres s'étendent sensiblement sur le double de la longueur hors-tout de la première desdites chambres, de manière à permettre le dépôt de barres entières par les orifices de ladite seconde chambre et de demi-barres par les orifices de ladite première chambre.

9. Un appareil à jets d'encre selon l'une quelconque des précédentes revendications, dans lesquel lesdits moyens formant transducteur comprennent un élément piézoélectrique intégré.

10. Un appareil à jets d'encre selon l'une quelconque des précédentes revendications, comprenant un élément en forme de socle pour fixer lesdits moyens formant transducteur sur ladite chambre.

11. Un appareil à jets d'encre selon la revendication 1, dans lequel lesdits orifices sont espacés uniforméments à partir du bord de ladite première paroi.

12. Un appareil à jets d'encre selon la revendication 1, dans lequel chacun desdits orifices est espacé par rapport au bord de ladite première paroi d'une distance au moins égale à la moitié de la distance entre lesdits orifices.

13. Un appareil à jets d'encre selon la revendication 1, dans lequel lesdits orifices sont répartis de façon sensiblement uniforme sur ladite première paroi.

14. Un procédé d'émission simultanée d'une trame de gouttelettes à la demande, utilisant un appareil à jets d'encre à projection à la demande comprenant une chambre munie d'une première paroi et d'une seconde paroi, une pluralité d'orifices dans ladite première paroi formant une rangée s'étendant sensiblement sur la même longueur que ladite chambre, et des moyens comprenant un élément oblong dont l'axe d'allongement s'étend le long de la longueur de celle-ci, perpendiculairement à ladite rangée, pour modifier le volume d'encre de ladite chambre, ledit élément oblong étant agencé pour se dilater et se contracter le long dudit axe d'allongement en réponse à son état d'excitation ou de sollicitation, ledit procédé comprenant les étapes de:
modification du volume d'encre dans ladite chambre par sollicitation dudit élément oblong de manière à déplacer ainsi ladite seconde paroi sensiblement comme un plan en direction de ladite première paroi, de manière que ledit plan soit sensiblement parallèle à ladite rangée; et de
projection simultanée d'une gouttelette à partir de chaque orifice de la pluralité d'orifices à une vitesse sensiblement uniforme.

15. Un procédé selon la revendication 14, dans lequel les gouttelettes sont projetées suivant un dessin linéaire de manière à former une barre.

16. Un procédé selon la revendication 14, comprenant la répétition desdites étapes.
